# EUROPEAN PATENT SPECIFICATION

(11) **EP 1 152 606 B1**
(45) Date of publication and mention of the grant of the patent: **05.10.2011**
(21) Application number: 01302418.7
(22) Date of filing: 15.03.2001
(51) Int. Cl.: H04N 5/45

(54) **OSD system**
OSD System
Système OSD

(30) Priority: 24.04.2000 KR 2000021558
(43) Date of publication of application: 07.11.2001
(73) Proprietor: SAMSUNG ELECTRONICS CO., LTD., Suwon-si, Gyeonggi-do 442-742 (KR)
(72) Inventor: Lee, Sung Lyong, Seoul (KR)
(74) Representative: Walaski, Jan Filip

(56) References cited:
- EP-A- 0 741 479
- WO-A-98/43419
- WO-A-98/48571

## Description

The present invention relates an apparatus for generating OSD data and a display apparatus having an OSD function.

Digital televisions (DTV) can display images according to digital television image signals received using its own tuner and image information from various other sources. For example, a DTV may be provided with a television signal from a satellite using a satellite broadcast receiver, commonly called a "set top box" (STB), or a cable converter, an image signal reproduced from a digital video disc (DVD) player, and an image signal reproduced from a digital video tape recorder DVCR through an IEEE 1394 bus. The DTV 1394 interface standard is specified in the EIA-775 standard series. In this standard, a source providing an image signal is termed a "producer" and an apparatus receiving and displaying an image signal, such as a DTV is termed a "consumer". In the DTV 1394 standard, an image signal is provided to a consumer in an MPEG transport stream and OSD data is provided to a consumer in a bitmap format. Also, a producer and a consumer exchange a control signal and a state signal.

Commonly, both producers and consumers are controlled using respective remote controllers. During control of a consumer, the user is provided with feedback by means of on-screen display (OSD) of information. Since producers do not normally have their own displays, feedback during setting of the producer is provided by OSD of information on the screen of the consumer, e.g. a DTV.

If there is a large amount of OSD data to be transferred from the producer to the consumer, the displayed image can be adversely affected.

A OSD data generating apparatus according to the present invention is characterised by being configured to be responsive to a cursor capability signal from a display apparatus having an OSD function to transmit OSD cursor position data selectively with or without cursor form data to a display apparatus providing a cursor capability signal.

According to an aspect of the present invention, there is provided an apparatus according to claim 1.

According to a further aspect of the present invention, there is provided an OSD display method according to claim 2.

According to a further aspect of the present invention, there is provided an OSD image display system according to claim 3.

An embodiment of the present invention will now be described, by way of example, with reference to the accompanying drawings, in which;
Figure 1 shows an OSD image display apparatus according to the present invention;

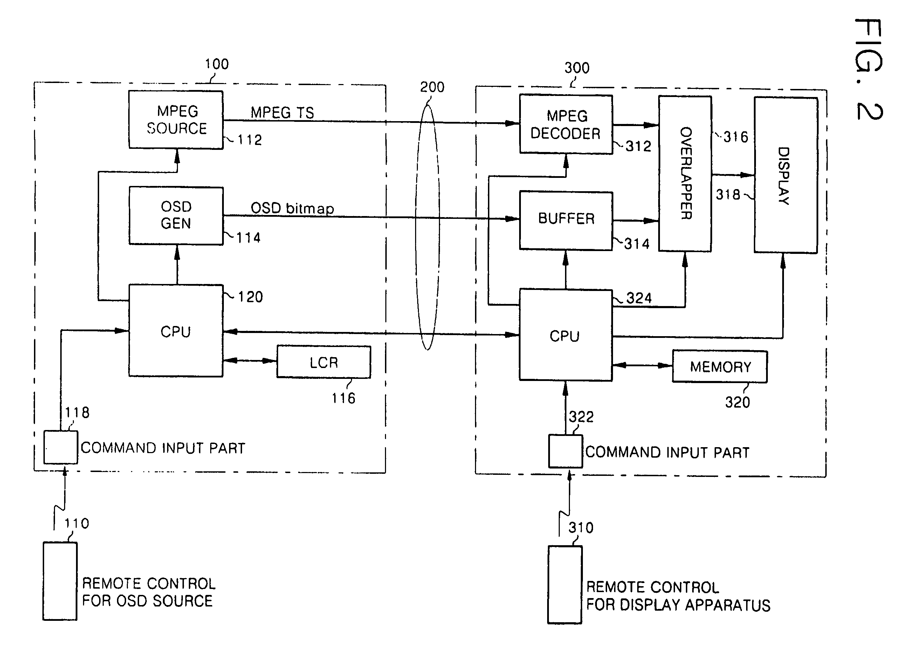

Figure 2 is a circuit diagram illustrating the operation of the apparatus of Figure 1;
Figure 3 is a drawing showing the data structure of a limit count register of a producer according to the present invention; and
Figure 4 shows a sub frame structure of OSD cursor data transmitted from a producer to a consumer according to the present invention.

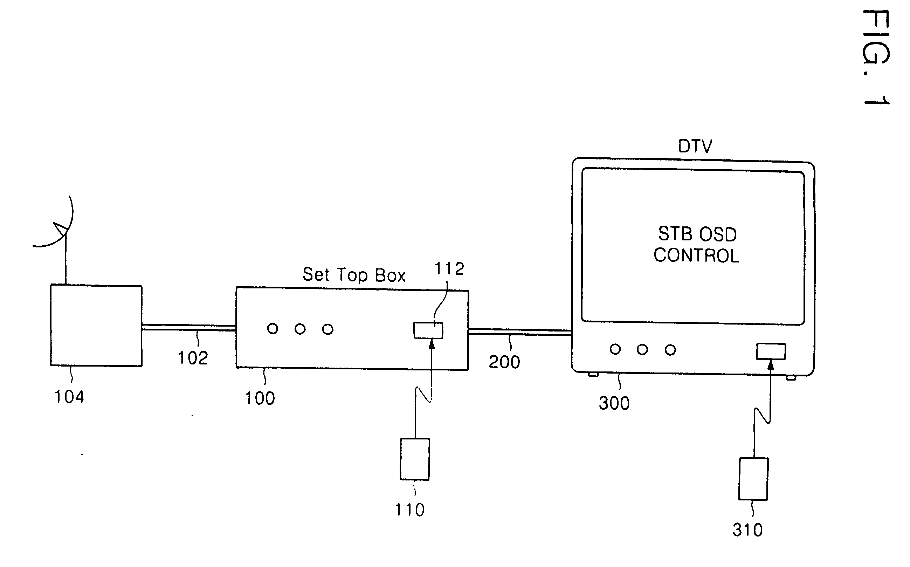

Referring to Figure 1, a set top box 100 and a producer receive a digital satellite broadcast signal form a satellite by means of a satellite antenna 104 connected through a coaxial cable 102. The set top box 100 detects an MPEG transport stream from the received satellite broadcast signal and then provides the detected MPEG transport stream to a DTV 300 through a DTV 1394 bus 200.

The set top box 100 receives commands generated by a remote controller 110 through a remote control receiving part 112. Corresponding OSD data is generated in response to the input command and is provided to the DTV 300 through the DTV 1394 bus 200.

The DTV 300 recovers an image signal by decoding the received MPEG transport stream through an MPEG decoder, and displays it on a screen overlaid with any received OSD data. Therefore, a user can control a STB 100, using the respective remote controller, by viewing an OSD screen of the STB displayed on the screen of the DTV.

The DTV 300 is controlled through a DTV remote controller 310.

The set top box 100 and the DTV 300 are interconnected with a DTV 1394 bus 200.

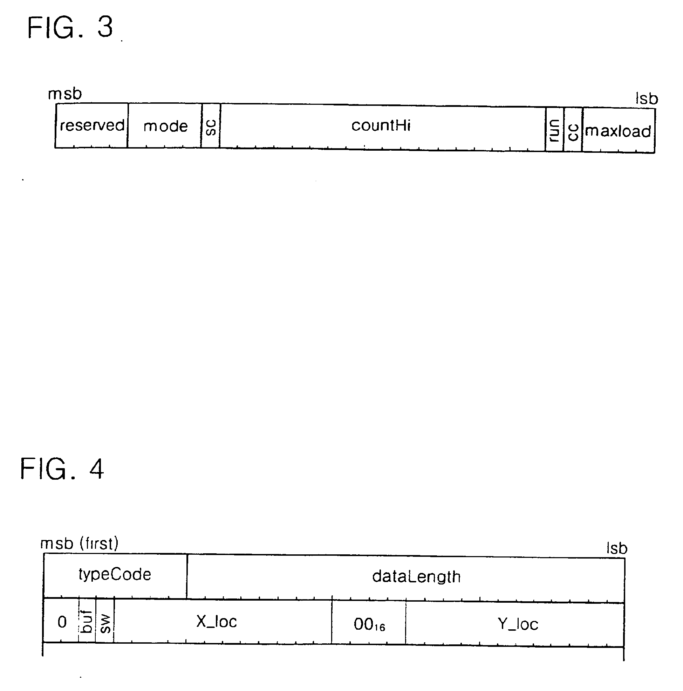

The set top box 100 includes an MPEG source 112, an OSD generator 114, a limit count register 116, a command input part 118 and a control part 120. The MPEG source detects an MPEG transport stream by receiving a satellite broadcast signal under the control of the control part 120 and provides the detected MPEG transport stream to the DTV 300. The OSD generator 114 generates OSD display data in bitmap format under the control of the control part 120. The limit count register 120 stores four bytes data as shown in Figure 3. The data structure of the limit count register in Figure 3 is shown in table 1.

**Table 1**

| | |
|---|---|
| CLASSIFICATION | DESCRIPTION |
| RESERVED | 0 |
| MODE | 0:FREE, 1:RESERVED, 2:SUSPEND, 3:RESERVED, |
| | 4:RESUME5:SEND, 6~7:RESERVED |
| SC | TOGGLE BIT |
| COUNTHI | 18 BITS COUNT VALUE |
| RUN | |
| CC | WHETHER SUPPORTING CONSUMR OR NOT-0: DO |
| | NOT HAVE OWN CURSOR 1: HAVE OWN CURSOR |
| MAXHOLD | INDICATE DATA-PAYLOAD SIZE FOR ENTERING 4 |
| | BITS SEGMENT BUFFER |

According to the present invention, limit count register information is provided from the DTV to the STB when the STB 100 and the DTV 300 are connected at first. At this time, in case of a DTV having its own cursor display data, a bit value of CC is set to "1".

The DTV 300 includes an MPEG decoder 312, a buffer 314, an overlapper 316, an image display 318, a memory 320, a command input part 322 and a control part 324.

The MPEG decoder 312 outputs image data to the overlapper 316 by decompressing compressed image data in a received MPEG transport stream. The buffer 314 buffers the provided OSD data and provides the corresponding OSD data to the overlapper 316 under the control of the control part 324. The overlapper 316 overlaps the image data and the OSD data and provides it to the image display 318. OSD cursor display data is stored in the memory 320 as an own OSD generator of the DTV. The command input part 322 receives a command signal generated by the remote controller 310 and provides the command signal to the control part 324.

The OSD image display apparatus constituted with the OSD source of the STB 100 and the display apparatus of the DTV 300 provides, by setting CC information among limit count register information to "1" from the DTV 300, while the STB 100 and the DTV 300 are connected. The provided limit count register information is stored in the limit count register 116 of the STB 100.

The STB 100 checks whether the connected DTV 300 has its own cursor display data by referring to the limit count register 116 through the control part 120 in the case that the OSD cursor display command is input using the remote controller 100. Here, in the case that the CC value is set as "1", the STB 100 outputs OSD cursor display information by providing a control signal to the OSD generator 114. Then, the OSD cursor display information includes only eight bits of cursor display location information or cursor ID information.

The cursor ID information sub frame includes TYPECODE (1 byte), data length (3 bytes), BUF (1 bit), SW (1 bit), X co-ordinate value of a cursor display location (12 bits) and Y co-ordinate value of the cursor location (12 bits). TYPECODE comprises "0XF3" indicating a consumer cursor mode and the data length of four bytes. Here, "0X" of "0XF3" indicates hexadecimal notation. Therefore, "F3" indicates a value of 18. BUF has a value of "0", and SW has a value of "0". "00" of BUF and SW is a control code for locating cursor display data in the buffer 314 promptly in the consumer.

Therefore, the DTV 300 analyzes the sub frame in Figure 4 received in the buffer 314, and if the TYPECODE value is "0XF3", it is an own cursor display mode, after reading the own cursor display data stored in the memory 320 and storing promptly said own cursor display data in the buffer 314, the DTV displays the own cursor display data stored in the buffer 314 at a screen location designated by the given X and Y co-ordinate values.

Therefore, according to the present invention, the STB 100 does not send the whole OSD cursor display data in bitmap format at every cursor location movement to the DTV 300. If only the OSD cursor id screen location data is sent, the STB 300 reads its own cursor display data and displays its own cursor display data at the given location on the screen. Therefore, because the amount of data reception and transmission between the STB 100 and the DTV 300 is reduced largely, the movement of the cursor on the screen can be displayed very fast, and therefore it can be viewed very naturally when a user views visually.

As described like said, because only cursor location information of a cursor is to be transmitted in transmitting OSD cursor display data between a producer and a consumer, the amount of data transmission is reduced. Therefore, because the amount of data to be processed in the consumer is reduced, it is possible to display an OSD cursor of the producer on a screen of the consumer at high speed.

## Claims

1. An apparatus (100) for generating OSD data, the apparatus configured to be responsive to a signal from a display apparatus (300), received at first connection of the apparatus (100) with said display apparatus (300), said signal indicating whether said display apparatus (300) has its own cursor display data or not, said apparatus (100) setting a register value (CC) in accordance with said received signal;
said apparatus further having an OSD function to transmit OSD data selectively with or without OSD cursor data to the display apparatus in accordance with the value set in the register.

2. An OSD display method, comprising the steps of:
checking whether OSD cursor data is present at a display apparatus (300) and transmitting a signal, said signal indicating whether said display apparatus (300) has its own cursor display data or not, from the display apparatus to an OSD source (100) on first connection of the OSD source with the display apparatus;
said OSD source (100) setting a register value (CC) in accordance with said received signal; and
said OSD source transmitting OSD data selectively with or without OSD cursor data to the display apparatus in accordance with the value set in the register.

3. An OSD image display system, comprising:
a display apparatus(300) which includes a memory where OSD data is stored, the display apparatus arranged to output a signal, said signal indicating whether said display apparatus (300) has its own cursor display data or not; and
an OSD source (100) for generating an OSD display on the screen of said display apparatus;
in which the OSD source is arranged to receive the signal at first connection of the apparatus (100) with said display apparatus (300),
said OSD source (100) arranged to set a register value (CC) in accordance with said received signal;
said OSD source further having an OSD function to transmit OSD data selectively with or without OSD cursor data to the display apparatus in accordance with the value set in the register.

## Patentansprüche

1. Vorrichtung (100) zum Erzeugen von OSD-Daten, wobei die Vorrichtung dafür konfiguriert ist, auf ein Signal von einer Anzeigevorrichtung (300) zu reagieren, das bei der ersten Verbindung der Vorrichtung (100) mit der Anzeigevorrichtung (300) empfangen wurde, wobei das Signal anzeigt, ob die Anzeigevorrichtung (300) über seine eigenen Cursoranzeigedaten verfügt oder nicht, wobei die Vorrichtung (100) einen Registerwert (CC) gemäß dem empfangenen Signal festlegt;
wobei die Vorrichtung weiterhin über eine OSD-Funktion verfügt, um OSD-Daten gezielt mit oder ohne OSD-Cursordaten an die Anzeigevorrichtung gemäß dem in dem Register festgelegten Wert zu übertragen.

2. OSD-Anzeigeverfahren, das die folgenden Schritte umfasst:
Prüfen, ob OSD-Cursordaten an einer Anzeigevorrichtung (300) vorliegen, und Übertragen eines Signals, wobei das Signal anzeigt, ob die Anzeigevorrichtung (300) über seine eigenen Cursoranzeigedaten verfügt oder nicht, von der Anzeigevorrichtung an eine OSD-Quelle (100) bei der ersten Verbindung der OSD-Quelle mit der Anzeigevorrichtung;
wobei die OSD-Quelle (100) einen Registerwert (CC) gemäß dem empfangenen Signal festlegt und
wobei die OSD-Quelle OSD-Daten gezielt mit oder ohne OSD-Cursordaten an die Anzeigevorrichtung gemäß dem in dem Register festgelegten Wert überträgt.

3. OSD-Bildanzeigesystem, das Folgendes umfasst:
eine Anzeigevorrichtung (300), die einen Speicher beinhaltet, in dem OSD-Daten gespeichert werden, wobei die Anzeigevorrichtung dafür eingerichtet ist, ein Signal auszugeben, wobei das Signal anzeigt, ob die Anzeigevorrichtung (300) über seine eigenen Cursoranzeigedaten verfügt oder nicht; und
eine OSD-Quelle (100) zum Erzeugen einer OSD-Anzeige auf dem Bildschirm der Anzeigevorrichtung;
wobei die OSD-Quelle dafür eingerichtet ist, das Signal bei der ersten Verbindung der Vorrichtung (100) mit der Anzeigevorrichtung (300) zu empfangen,
wobei die OSD-Quelle (100) dafür eingerichtet ist, einen Registerwert (CC) gemäß dem empfangenen Signal festzulegen;
wobei die OSD-Quelle weiterhin über eine OSD-Funktion verfügt, um OSD-Daten gezielt mit oder ohne OSD-Cursordaten an die Anzeigevorrichtung gemäß dem in dem Register festgelegten Wert zu übertragen.

## Revendications

1. Appareil (100) pour générer des données OSD, lequel appareil est configuré pour réagir à un signal venant d'un appareil d'affichage (300), reçu lors de la première connexion de l'appareil (100) avec ledit appareil d'affichage (300), ledit signal indiquant si ledit appareil d'affichage (300) possède ou non ses propres données d'affichage de curseur, ledit appareil (100) fixant une valeur de registre (CC) en fonction dudit signal reçu ;
ledit appareil possédant en plus une fonction OSD pour transmettre des données OSD sélectivement avec ou sans données de curseur OSD à l'appareil d'affichage en fonction de la valeur fixée dans le registre.

2. Procédé d'affichage OSD, comprenant les étapes consistant à :
vérifier si des données de curseur OSD sont présentes au niveau d'un appareil d'affichage (300) et transmettre un signal, ledit signal indiquant si ledit appareil d'affichage (300) possède ou non ses propres données d'affichage de curseur, de l'appareil d'affichage à une source OSD (100) lors de la première connexion de la source OSD avec l'appareil d'affichage ;
ladite source OSD (100) fixant une valeur de registre (CC) en fonction dudit signal reçu ; et
ladite source OSD transmettant des données OSD sélectivement avec ou sans données de curseur OSD à l'appareil d'affichage en fonction de la valeur fixée dans le registre.

3. Système d'affichage d'images OSD, comprenant :
un appareil d'affichage (300) qui comprend une mémoire dans laquelle des données OSD sont stockées, l'appareil d'affichage étant agencé pour délivrer un signal, ledit signal indiquant si ledit appareil d'affichage (300) possède ou non ses propres données d'affichage de curseur ; et
une source OSD (100) pour générer un affichage OSD sur l'écran dudit appareil d'affichage ;
dans lequel la source OSD est agencée pour recevoir le signal lors de la première connexion de l'appareil (100) avec ledit appareil d'affichage (300),
ladite source OSD (100) étant agencée pour fixer une valeur de registre (CC) en fonction dudit signal reçu ;
ladite source OSD possédant en outre une fonction OSD pour transmettre des données OSD sélectivement avec ou sans données de curseur OSD à l'appareil d'affichage en fonction de la valeur fixée dans le registre.
